Europäisches Patentamt

European Patent Office

Office européen des brevets

(11) Numéro de publication: **0 269 535 B1**

# FASCICULE DE BREVET EUROPEEN

(45) Date de publication de fascicule du brevet: **11.03.92**   (51) Int. Cl.⁵: **H02K 49/06**, H02K 49/10

(21) Numéro de dépôt: **87420313.6**

(22) Date de dépôt: **23.11.87**

(54) **Coupleur magnétique à hysterésis à couple peu dépendant de la vitesse de glissement et son utilisation.**

(30) Priorité: **25.11.86 FR 8616947**

(43) Date de publication de la demande:
**01.06.88 Bulletin 88/22**

(45) Mention de la délivrance du brevet:
**11.03.92 Bulletin 92/11**

(84) Etats contractants désignés:
**AT BE CH DE ES FR GB GR IT LI LU NL SE**

(56) Documents cités:
**DE-B- 1 214 318**
**GB-A- 266 799**
**GB-A- 1 307 831**
**US-A- 4 152 617**
**US-A- 4 186 320**

(73) Titulaire: **DELACHAUX S.A.**
**119, Avenue Louis-Roche**
**F-92231 Gennevilliers(FR)**

(72) Inventeur: **Lacour, Gilles**
**Léchaud**
**F-01300 Belley(FR)**

(74) Mandataire: **Martin, Jean-Jacques et al**
**Cabinet REGIMBEAU 26, Avenue Kléber**
**F-75116 Paris(FR)**

**Description**

L'invention concerne le domaine des accouplements magnétiques à hystérésis, et l'utilisation de tels accouplements ou coupleurs dans les dispositifs enrouleurs-dérouleurs.

Le brevet FR-1 602 519 décrit un dispositif enrouleur-dérouleur utilisant de tels coupleurs. Chaque coupleur comporte deux éléments coaxiaux susceptibles d'être en rotation l'un par rapport à l'autre: l'un de ces éléments contient un inducteur développant un champ magnétique multipolaire alterné dont les pôles se succèdent par symétrie de révolution autour de l'axe de révolution, et l'autre élément est en matière ferromagnétique, de préférence magnétiquement dure, non préalablement aimantée. L'inducteur comporte des électro-aimants ou de préférence des aimants permanents. Au cours de l'enroulement ou du déroulement, on peut maintenir le moteur d'entrainement à la vitesse normale grâce aux possibilités de glissement des éléments récepteurs ou éléments menés par rapport aux éléments moteurs ou éléments menants. Selon ce document, le couple transmis reste alors pratiquement constant. L'expérience a toutefois montré que, aux vitesses de glissement élevées et surtout au déroulement le couple transmis augmentait d'un façon importante et gênante avec la vitesse de glissement, avec un accroissement pouvant dépasser par exemple + 60 % relatif pour des vitesses de glissement supérieures à 2000 tours min, dans le cas des coupleurs d'enrouleurs et du déroulement.

Par ailleurs, le brevet ancien GB-A-266 799 (1927) décrit, en particulier des moteurs électriques comprenant un élément induit peu ou pas conducteur électriquement composé de matériaux magnétiques à hystérésis sous forme divisée, éventuellement mélangés à un liant non conducteur, conduisant à l'absence pratique de courants de Foucault. Ces induits et ces moteurs sont simples et peu coûteux.

La demande de brevet allemand DE-B-1 214 318 décrit quant à elle un dispositif utilisable notamment comme coupleur magnétique à hystérésis, comportant également un sous-ensemble inducteur et un sous-ensemble induit qui comprend un ou plusieurs aimants à hystérésis et qui, à cet effet, est en partie au moins constitué d'une pâte moulée contenant des particules d'aimants à hystérésis dispersées dans un liant isolant électriquement.

La demanderesse a cherché à mettre au point un coupleur magnétique donnant un couple transmis dépendant peu ou pas de la vitesse de glissement.

EXPOSE DE L'INVENTION

L'invention a pour objet un coupleur magnétique à hystérésis qui, comme il est connu par les documents GB-A-2 667 et 799 et DE-B-1 214 318, comporte un sous-ensemble inducteur et un sous-ensemble induit qui comprend un ou plusieurs aimants à hystérésis et qui, à cet effet, est en partie au moins constitué d'une pâte moulée contenant des particules d'aimants à hystérésis dispersées dans un liant isolant électriquement. Selon l'invention, le liant isolant électriquement est constitué de particules isolantes électriquement noyées dans une résine, ces particules ayant une meilleure conductibilité thermique que la résine, et représente 25 à 60% du volume de la pâte et la pâte est en continuité thermique avec un élément de refroidissement.

De façon générale, la liaison thermique entre un induit et un élément de refroidissement est en elle-même décrite dans le brevet américain US-A-4 186 320.

Le sous-ensemble inducteur comprend des aimants permanents ou des électro-aimants, et le couplage inductif entre inducteur et induit exercé par le coupleur s'applique, que l'inducteur soit en situation de pièce menante, c'est-à-dire entraînée mécaniquement, ou de pièce menée. L'enseignement de l'art antérieur ne permet pas de résoudre le problème posé, à savoir de mettre au point un coupleur magnétique donnant un couple transmis dépendant peu de la vitesse de glissement, spécialement pour les vitesses de glissement élevées, c'est-à-dire supérieures à 1000 tours/min. et typiquement comprises entre 1000 et 3000 tours/min.

La solution du problème selon l'invention est la combinaison des moyens suivants :

a) le sous-ensemble induit comprend une pâte composite moulée, formant la partie active de l'induit, ce qui est connu en soi par GB-A-266 799 et DE-B-1 214 318 et cette pâte composite moulée est typiquement formée de morceaux ou de poudre d'aimants ferro-magnétiques, par exemple des aimants du type Al-Ni-Co ou Fe-Nd-B liés par un isolant électrique, à savoir une résine dans laquelle sont noyées des particules isolantes électriquement et ayant une meilleure conductibilité thermique que la résine. De plus, la proportion en volume de ce liant doit se situer dans un intervalle important à la fois pour les possibilités de réalisation, la longévité et l'efficacité du coupleur selon l'invention. Il faut au moins 25 % en volume de liant pour permettre un malaxage aisé des morceaux ou particules d'aimants dans la pâte moulée et un bon remplissage pour le moulage, et pour obtenir, en même temps, une pâte non conductrice électriquement, c'est-à-dire dont les particules sont au moins globalement suffisamment

2

isolées les unes des autres. On a remarqué qu'alors une dispersion normale des particules d'aimant dans le liant, correspondant à un malaxage de qualité moyenne, était suffisante, un essai comparatif avec oxydation préalable des particules d'aimants n'ayant pas conduit à une amélioration sensible du comportement du coupleur pour des vitesses de glissement allant jusqu'à 2000 tours/min. Lorsqu'on augmente beaucoup la proportion de liant, le couple transmis par unité de surface de l'induit diminue d'une façon excessive, et en pratique cette proportion de liant ne doit pas dépasser 60 % en volume. Les essais effectués ont montré que vis-à-vis des trois facteurs évoqués (facilité du mélange et du moulage, isolement suffisant des particules d'aimant entre elles, et faible variation du couple transmis avec la vitesse de glissement), le liant isolant électriquement doit représenter de préférence 30 à 40 % du volume de la pâte composite moulée.

b) aux fortes vitesses de glissement, les cycles d'hystérésis se succèdent rapidement et créent dans l'induit composite un échauffement important qui, sans mesure de refroidissement, conduirait à la désagrégation de la pâte moulée. Il est nécessaire, à cet égard, que la pâte moulée soit en continuité thermique avec un élément de refroidissement, comme il est connu en soi par US-A-4 186 320.

La nature de la pâte composite conduit à une température de fonctionnement des pièces induites plus faible en régime de glissement que la température de pièces induites massives, la dispersion du matériau à hystérésis diminuant la densité de l'échauffement dû aux pertes magnétiques par hystérésis, et l'échauffement dû aux courants de Foucault étant pratiquement supprimé. Les échauffements résiduels doivent cependant être encore diminués, le liant employé ayant une résistance limitée aux surchauffes. La pâte moulée est donc typiquement fixée sur un support jouant le rôle de diffuseur thermique, plus de 40 % de sa surface étant en contact avec ce support. Par exemple, le liant est une résine thermo-durcissable et la pâte composite garnit la portion en creux d'un support située en face de l'inducteur, 55 à 60 % de la surface de la pâte composite étant alors en bon contact thermique avec le support, et la dissipation thermique par ce support muni d'ailettes de refroidissement est telle que, en fonctionnement, la température de la pâte composite reste toujours inférieure à 100° C, alors que, sans refroidissement, elle dépasserait 160° C, entraînant une désagrégation assez rapide du liant.

Quelle que soit la proportion de liant isolant électriquement, il est souhaitable d'avoir des tailles de particules d'aimants à hystérésis limitées par rapport à la dimension des pôles de l'inducteur, les dimensions de chacune de ces particules étant donc en pratique inférieures au 1/3 de la largeur des pôles, sinon l'effet dû à des courants de Foucault peut redevenir notable. Et il est souhaitable que les particules d'aimants ne soient pas non plus trop petites, sous peine de perdre de l'efficacité dans la transmission du couple, 75 % en masse ou en volume de ces particules ayant donc des dimensions au moins égales à 0,2 mm, et de préférence comprises entre 0,3 et 0,8 mm.

De façon à diminuer encore les échauffements résiduels dans la pâte composite de l'induit, le liant est constitué de particules isolantes électriquement noyées dans une résine, ces particules ayant en outre une meilleure conductibilité thermique que ladite résine. On peut ainsi avoir 40 à 80 % en volume de fines particules de verre, d'alumine ou de céramique noyées dans de la résine, les dimensions moyennes de ces particules étant typiquement comprises entre 5 et 30 $\mu$m. L'utilisation d'une résine époxyde comme liant, ou comme composant d'un liant chargé de telles particules est alors particulièrement commode pour réaliser le sous-ensemble induit.

Le sous-ensemble induit du coupleur de l'invention peut également être en partie au moins constitué d'un fil ou d'un ruban en matière aimantable à hystérésis gainé d'un isolant électrique, comme cela est connu en soi par GB-A-266,799. Le sous-ensemble induit peut être alors en partie au moins constitué d'un enroulement de ce fil ou ruban, typiquement en spirale ou cylindrique, l'isolant électrique de ce fil ou ruban représentant 25 à 40 % du volume.

En ce qui concerne le support d'induit, on a trouvé que, de façon surprenante, un support en matière plastique avec ailettes de refroidissement conduit à la disparition de toute dépendancer du couple transmis à l'induit vis-à-vis de la vitesse de rotation relative de l'inducteur. De façon plus générale, il est préférable de réaliser le support d'induit en matériau amagnétique et faiblement conducteur électrique de façon à diminuer encore ou à annuler les variations du couple avec la vitesse de glissement. Lorsqu'on utilise ainsi un support en matière plastique, cette matière peut être chargée en éléments de renfort mécanique tels que des fibres de verre, et on obtient alors une solution particulièrement simple et performante du problème posé. D'après les résultats surprenants observés avec un support en matière plastique, on déduit qu'il subsiste quelques courants de Foucault avec un support conducteur électrique tel que l'aliuminium, et que ces courants résiduels sont alors éliminés ou fortement diminués avec un support pas ou peu conducteur électriquement. On a constaté en même temps que le refroidissement par un support en matière plastique, bien que relativement médiocre, est, dans ce cas, suffisant, et cela probablement parce que ce choix de matière du support entraîne la diminution ou la disparition des courants de Foucault résiduels, sources d'échauffement.

L'invention a, en second lieu, pour objet l'utilisation du coupleur à pièce induite composite, selon l'une quelconque des formes précédemment décrites, dans un enrouleur-dérouleur. Dans un tel dispositif, la régularité du couple transmis et la limitation de l'échauffement du ou des coupleurs sont importantes pour la sécurité du fonctionnement.

**EXEMPLES**

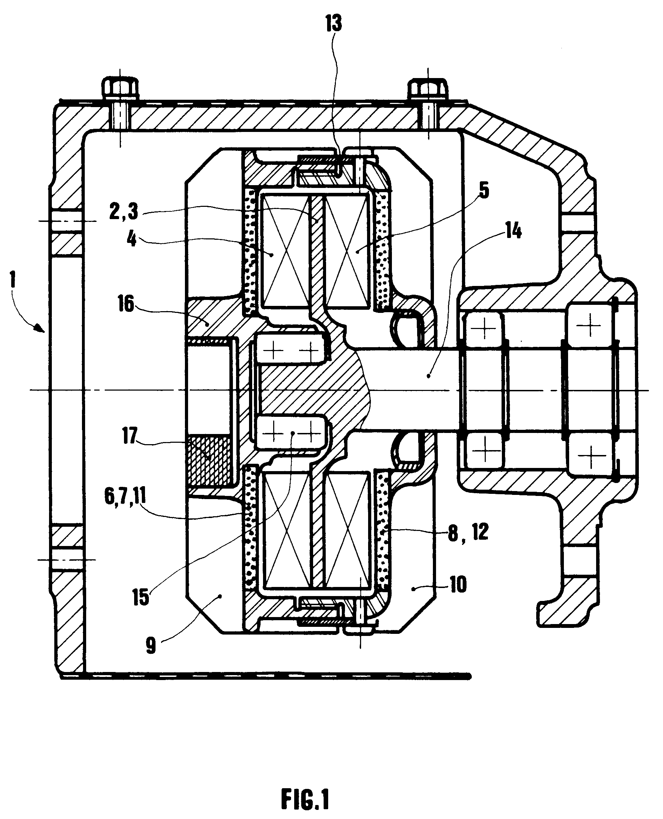

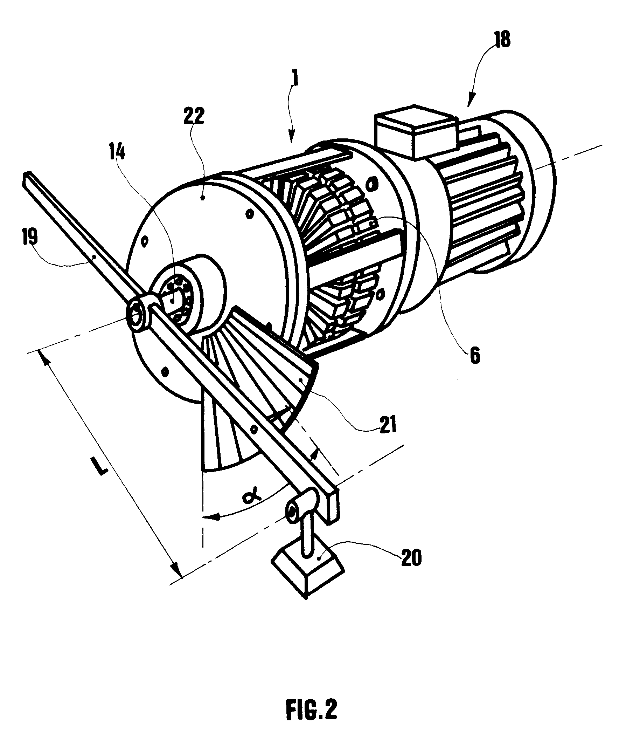

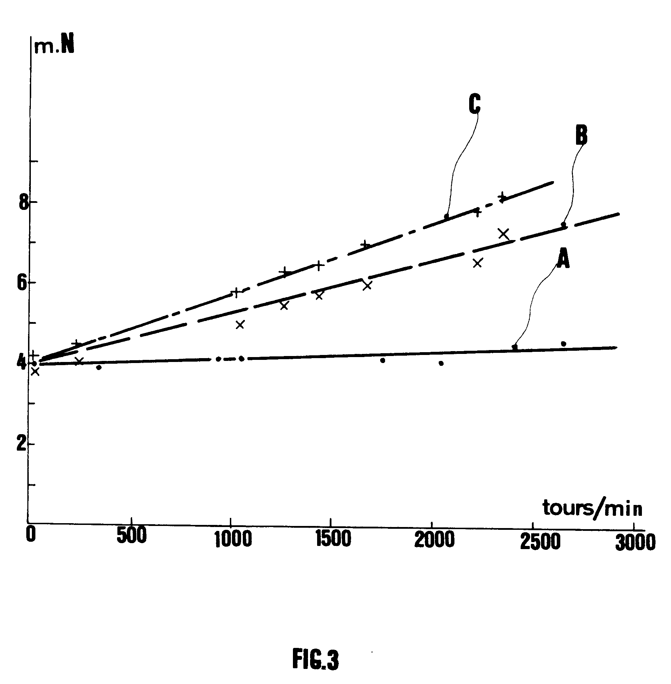

. La figure 1 représente un coupleur magnétique à hystérésis selon l'invention, en coupe axiale longitudinale.
. La figure 2 représente le dispositif d'essai comparatif, en vue perspective.
. La figure 3 représente la variation du couple transmis en fonction de la vitesse, pour un coupleur selon l'invention et pour un coupleur selon l'art antérieur.

Sur la figure 1, on peut voir un coupleur 1 dont le sous-ensemble inducteur 2 est constitué d'un plateau 3 portant deux aimants permanents en forme de couronnes 4 et 5, et se prolongeant en un arbre de sortie 14 pouvant tourner entre les roulements 15, et dont le sous-ensemble induit 6 comporte deux induits 7 et 8 comprenant chacun un support 9 et 10 et une plaque de pâte magnétique moulée 11 et 12 constituée de 30 % en volume de résine époxyde chargée de billes d'alumine de diamètre 9 m et de 70 % de poudre Al-Ni-Co de composition en % en masse : Ni 25, Al 12, Co 5, Cu 4, Fe : le solde. Ces deux plaques induites en pâte magnétique avaient chacune les dimensions suivantes: ø ext. 170 mm - ø int. 90 mm - épaisseur 3 mm. Elles étaient solidarisées par des liaisons telles que 13.

L'entraînement du sous-ensemble induit 6 se fait par l'intermédiaire d'un accouplement traditionnel simple comprenant ici des doigts 16 en alliage d'aluminium et une étoile intercalaire 17 en matériau élastique.

Les essais dont les résultats apparaissent sur la figure 3 ont été faits dans les conditions suivantes : le dispositif de mesure (figure 2) se composait d'un moteur 18 fixé au moyen d'une bride et de l'accouplement souple 16 et 17 (figure 1) au sous-ensemble induit 6 constituant le primaire du coupleur 1 - Un bras 19 était fixé rigidement à l'extrémité de l'arbre de sortie 14 perpendiculairement à cet arbre 14, et une masse 20 de 2 kg était suspendue à cet arbre à une distance L = 0,5 mm de l'arbre 14. Un cadran 21 gradué en degrés d'angle était fixé à la face d'extrémité 22 du capot du coupleur 1, perpendiculairement à l'arbre 14.

On entraînait au moyen du moteur 18 le primaire du coupleur 1 à une vitesse variable comprise entre 0 et 4000 tours/minute, et le bras 19 fixé sur l'arbre l4 et chargé de la masse 20 servait alors à appliquer un couple résistant variable avec la position angulaire. Dans la position d'équilibre, le bras rigide 19 étant immobile, le couple transmis est égal au couple résistant qu'on déduit simplement et rapidement de la mesure de l'angle de déviation a du bras 19 par rapport à la verticale descendante.

La précision de ce système était meilleure que 3 % pour l'estimation des couples transmis.

Les inducteurs 4 et 5 étaient des pièces en ferrite d'épaisseur 19mm avec 16 pôles en trapèze de hauteur 40 mm et de longueurs de bases 33 et 17,5 mm.

Les résultats ci-dessous ont été obtenus dans le cas de ce coupleur selon l'invention :

TABLEAU 1

| Vitesse inducteur (tours/min) | 16 | 340 | 950 | 1050 | 1750 | 2050 | 2650 |
|---|---|---|---|---|---|---|---|
| Couple transmis (m.N) | 4,0 | 3,9 | 4,1 | 4,2 | 4,2 | 4,1 | 4,6 |

Ces résultats sont repris sur la figure 3 (courbe A), représentant le couple transmis en fonction de la vitesse de rotation relative ou vitesse de glissement. Dans le cas de ce premier coupleur, le couple transmis a augmenté d'environ 7,5 % au niveau de 2000 t/min.

Pour comparer ces résultats avec ceux d'un coupleur à induit massif, on a testé un coupleur semblable ayant le même inducteur et une seule plaque induite massive en Al-Ni-Co de même composition que la poudre précédente ø ext. 143 mm x ø int. 70 mm x épaisseur 8 mm avec seulement 8 pôles, l'accroissement du couple transmis avec la vitesse de rotation relative étant alors moindre qu'avec 16 pôles. Les résultats de ces tests figurent dans le tableau 2 et sont reportés dans la figure 3 (courbe B). Pour les besoins de la comparaison, on a calculé par extrapolation (tableau 2 et courbe C de la figure 3) les résultats correspondant à 2 plaques induites identiques à la précédente, situées dans la position des plaques 11 et 12 de la figure 1 - Les résultats du coupleur avec l'invention doivent être comparés à ces résultats pour deux plaques induites massives, car les surfaces du matériau magnétique des plaques induites, paramètres les plus importants ici vis-à-vis des courants de Foucault, s'échelonnent comme suit :
- coupleur selon l'invention : 163,3 x 2 x 0,7 = 229 cm2
- coupleur à 1 plaque induite massive : 122 cm2
- coupleur à 2 plaques induites massives : 244 cm2

### TABLEAU 2

| Vitesse (tours/min) | | 30 | 230 | 1030 | 1280 | 1420 | 1680 | 2220 | 2350 |
|---|---|---|---|---|---|---|---|---|---|
| Couple | 1 plaque induite | 3,9 | 4,0 | 5,0 | 5,5 | 5,7 | 6,0 | 6,6 | 6,7 |
| (m.N) | 2 plaques induites (calcul) | 4,0 | 4,4 | 5,8 | 6,3 | 6,5 | 7,0 | 7,9 | 8,2 |

Les résultats de la comparaison entre le coupleur à induit composite selon l'invention et entre le coupleur à deux plaques induites massives sont ici les suivants :

### TABLEAU 3

| - Accroissement du couple transmis avec la vitesse relative de rotation | | | | |
|---|---|---|---|---|
| Tours/min. | 1000 | 1500 | 2000 | 2500 |
| Coupleur à induit composite | + 5 % | + 6 % | + 7,5% | + 11% |
| Coupleur à induit massif | + 45 % | + 65 % | + 85 % | + 112% |

L'effet de l'invention devient ainsi très important lorsque la vitesse de rotation relative ou vitesse de glissement de l'induit par rapport à l'inducteur dépasse 1000 tours/min.

Selon une variante, on a réalisé les supports 9 et 10 des plaques induites 11 et 12 en matière plastique thermodurcissable chargée en fibres de verre, susceptible d'être moulée en fabrication de série. Les essais correspondants ont été effectués successivement avec: un coupleur comprenant 2 inducteurs à 16 pôles chacun et donnant un couple de 0,45 m x kg, et un coupleur comprenant 2 inducteurs à 14 pôles chacun et donnant un couple de 0,6 mm x kg. Le couple transmis pour des vitesses de rotation variant comme précédemment jusqu'à 2500 tours/min. est resté constant à mieux que l à 2 %, aucune variation n'ayant pu être détectée avec le système de mesure précédemment décrit.

En résumé, les essais montrent d'abord qu'un induit composite selon l'invention permet de diminuer fortement la dépendance du couple transmis à l'induit vis-à-vis de la vitesse de rotation relative de l'inducteur. Ils montrent ensuite le rôle de la nature de l'élément de refroidissement de la pâte moulée, la non dépendance du couple transmis vis-à-vis de la vitesse de rotation étant de façon surprenante obtenue avec un élément de refroidissement en matière plastique amagnétique et isolant électriquement, ce qui élimine tout effet de courants de Foucault. Un tel coupleur est capable de fonctionner avec un échauffement limité et à des vitesses de glissement élevées pendant de longues périodes.

## Revendications

1. Coupleur magnétique à hystérésis (1) comportant un sous-ensemble inducteur (2) et un sous-ensemble induit (6, 8) qui comprend un ou plusieurs aimants à hystérésis et qui, à cet effet, est en partie au moins constitué d'une pâte moulée (11, 12) contenant des particules d'aimants à hystérésis dispersées dans un liant isolant électriquement, caractérisé en ce que le liant isolant électriquement est constitué de particules isolantes électriquement noyées dans une résine, ces particules ayant une meilleure conductibilité thermique que ladite résine, et représente 25 à 60% du volume de la pâte moulée et en ce que la pâte moulée est en continuité thermique avec un élément de refroidissement (9, 10).

2. Coupleur selon la revendication 1, dans lequel la pâte moulée (11, 12) du sous-ensemble induit (6, 8) contient 30 à 40% en volume dudit liant isolant électriquement.

3. Coupleur selon l'une quelconque des revendications 1 et 2, dans lequel les particules d'aimants à hystérésis ont des dimensions unitaires inférieures au 1/3 de la largeur des pôles de l'inducteur (2) et en ce que 75% en masse au moins de ces particules ont des dimensions au moins égales à 0,2 mm, et de préférence comprises entre 0,3 et 0,8 mm.

**4.** Coupleur selon l'une quelconque des revendications 1 à 3, dans lequel le liant contient 40 à 80% en volume de particules de matériaux du groupe : verre, alumine, céramique.

**5.** Coupleur selon l'une quelconque des revendications 1 à 4, dans lequel l'élément de refroidissement est un support (9, 10) de la pâte moulée (11, 12) en matériau amagnétique et faiblement conducteur électrique, ce support (9, 10) étant muni d'ailettes de refroidissement.

**6.** Coupleur selon la revendication 5, dans lequel le support (9, 10) est en matière plastique.

**7.** Coupleur selon la revendication 6, dans lequel la matière plastique est chargée d'éléments de renfort mécanique.

**8.** Utilisation d'un coupleur selon l'une quelconque des revendications 1 à 7 dans un enrouleur-dérouleur, dans lequel l'inducteur ne comporte pas d'électro-aimants et l'induit est entraîné mécaniquement.

**Claims**

**1.** A magnetic coupler with hysteresis (1) including an inductive sub-unit (2) and an induced sub-unit (6, 8) which comprises one or more magnets with hysteresis and, to this end, is at least partly made of a moulded compound (11, 12) containing magnetic particles with hysteresis, dispersed in an electrically insulating binder, characterized in that the electrically insulating binder is made of electrically insulating particles embedded in a resin, these particles having better heat conducting properties than said resin, and represents 25% to 60% by volume of the moulded compound and in that the moulded compound is in a heat conductive relationship with a cooling element (9, 10).

**2.** The coupler of claim 1, wherein the moulded compound (11, 12) of the induced sub-unit (6, 8) contains 30 to 40% by volume of said electrically insulating binder.

**3.** The coupler of any of claims 1 and 2, wherein the magnetic particles with hysteresis have unit dimensions less than 1/3 the width of the poles of the inductor (2), and at least 75% by weight of those particles have dimensions at least equal to 0.2 mm and preferably from 0.3 to 0.8 mm.

**4.** The coupler of any of claims 1 to 3, wherein the binder contains 40 to 80% by volume of particles of materials from the group : glass, alumina and ceramics.

**5.** The coupler of any of claims 1 to 4, wherein the cooling element is a support (9, 10) for the moulded compound (11, 12) of non-magnetic, electrically poorly conducting material, this support (9, 10) being fitted with cooling fins.

**6.** The coupler of claim 5, wherein the support (9, 10) is made of plastics material.

**7.** The coupler of claim 6, wherein the plastics material is filled with mechanically reinforcing elements.

**8.** The use of a coupler according to any of claims 1 to 7 in a winding and unwinding mechanism, wherein the inductor has no electromagnets and the armature is driven mechanically.

**Patentansprüche**

**1.** Hysteresekupplung (1), mit einem Teilsystem-Feldmagneten (2) und einem Teilsystem-Läufer (6, 8), welcher einen oder mehrere Hysterese-Magneten aufweist und welcher dazu wenigstens zum Teil aus einer Formmasse (11, 12) gebildet ist, die Hysterese-Magnetteilchen enthält, welche in einem elektrisch isolierenden Bindemittel dispergiert sind, dadurch gekennzeichnet, daß das elektrisch isolierende Bindemittel aus elektrisch isolierenden Teilchen gebildet ist, die in einem Harz eingebettet sind, wobei diese Teilchen eine bessere thermische Leitfähigkeit haben als das Harz, und 25 bis 60% des Volumens der Formmasse darstellt und daß die Formmasse in thermischem Schluß mit einem Kühlelement (9, 10) ist.

**2.** Kupplung nach Anspruch 1, bei der die Formmasse (11, 12) des Teilsystem-Läufers (6, 8) 30 bis 40 Volumen-% des elektrisch isolierenden Bindemittels enthält.

3. Kupplung nach Anspruch 1 oder 2, bei der die Hysterese-Magnetteilchen Einheitsabmessungen haben, die geringer als 1/3 der Größe der Pole des Feldmagneten (2) sind, und daß wenigstens 75 Gewichts-% dieser Teilchen Abmessungen haben, die wenigstens gleich 0,2 mm sind und bevorzugt zwischen 0,3 und 0,8 mm liegen.

4. Kupplung nach einem der Ansprüche 1 bis 3, bei der das Bindemittel 40 bis 80 Volumen-% Teilchen aus Material der Gruppe: Glas, Aluminium, Keramik enthält.

5. Kupplung nach einem der Ansprüche 1 bis 4, bei der das Kühlelement ein Träger (9, 10) der Formmasse (11, 12) aus einem unmagnetischen und elektrisch schwach leitenden Material ist, wobei dieser Träger (9, 10) mit Kühlflügeln versehen ist.

6. Kupplung nach Anspruch 5, bei der der Träger (9, 10) aus Kunststoff ist.

7. Kupplung nach Anspruch 6, bei der in den Kunststoff Elemente zur mechanischen Verstärkung aufgegeben sind.

8. Verwendung einer Kupplung nach einem der Ansprüche 1 bis 7 bei einem Auf- und Abwickler, bei dem der Feldmagnet keine Elektromagneten aufweist und der Läufer mechanisch angetrieben ist.

**FIG.1**

**FIG.2**

**FIG.3**